# EUROPEAN PATENT SPECIFICATION

(11) **EP 2 246 968 B1**
(45) Date of publication and mention of the grant of the patent: **17.05.2017**
(21) Application number: 09712300.4
(22) Date of filing: 16.02.2009
(51) Int. Cl.: H02M 1/32, H02M 7/48, H02M 7/5387

(54) **DRIVE CIRCUIT FOR INDUCTIVE LOAD**
STEUERKREIS FÜR INDUKTIVE LAST
CIRCUIT D'EXCITATION POUR CHARGE INDUCTIVE

(30) Priority: 19.02.2008 JP 2008037273
(43) Date of publication of application: 03.11.2010
(73) Proprietor: Shima Seiki Manufacturing., Ltd., Wakayama-shi Wakayama 641-0003 (JP)
(72) Inventor: TAKASHITA, Shoshi, Wakayama-shi Wakayama 641-0003 (JP)
(74) Representative: Wagner, Karl H.
(86) International application number: PCT/JP2009/052491
(87) International publication number: WO 2009/104535

(56) References cited:
- JP-A- 2007 074 794
- JP-A- 2007 143 261
- LAI R S ET AL: "A PWM METHOD FOR REDUCTION OF SWITCHING LOSS IN A FULL-BRIDGE INVERTER", PROCEEDINGS OF THE ANNUAL APPLIED POWER ELECTRONICS CONFERENCE AND EXPOSITION (APEC). ORLANDO, FEB. 13 - 17, 1994; [PROCEEDINGS OF THE ANNUAL APPLIED POWER ELECTRONICS CONFERENCE AND EXPOSITION (APEC)], NEW YORK, IEEE, US, vol. 1, 13 February 1994 (1994-02-13), pages 122-127, XP000467309,

## Description

The present invention relates to a drive circuit for inductive loads such as solenoids, motors and coils, and more particularly to detection of ground faults around inductive loads.

Patent document 1: JP 11-81105 A discloses a pull-down apparatus for a knitted fabric in a knitting machine such as a flat knitting machine. In a flat knitting machine, the knitted fabric is pulled down under a needle bed. JP 11-81105 A discloses a pull-down apparatus that can release pull-down independently at respective positions within the knitted fabric, according to, for instance, the needle bed racking and the speed within which the knitted fabric moves over the needle bed. Solenoids are used to switch pull-down on and off. For instance, several tens of solenoids are controlled in parallel, so that pull-down can be engaged or released depending on the position within the knitted fabric.

Patent document 2: JP 62-6663 Y2 discloses a drive circuit for an inductive load. An H-shaped bridge is made up of four switches, and a coil is disposed at the horizontal side of the H-shaped bridge. Two switches along a diagonal of the bridge are switched on simultaneously, to apply current to the coil. Current can be applied thus to the coil from both directions, i.e. when current flows from the top left towards the bottom right of the bridge, and when current flows from the top right to the bottom left. Such a circuit is appropriate for applying current both upon solenoid setting and upon solenoid resetting. The circuit is also appropriate for causing current to flow through the coil in both directions using a brushless motor drive.

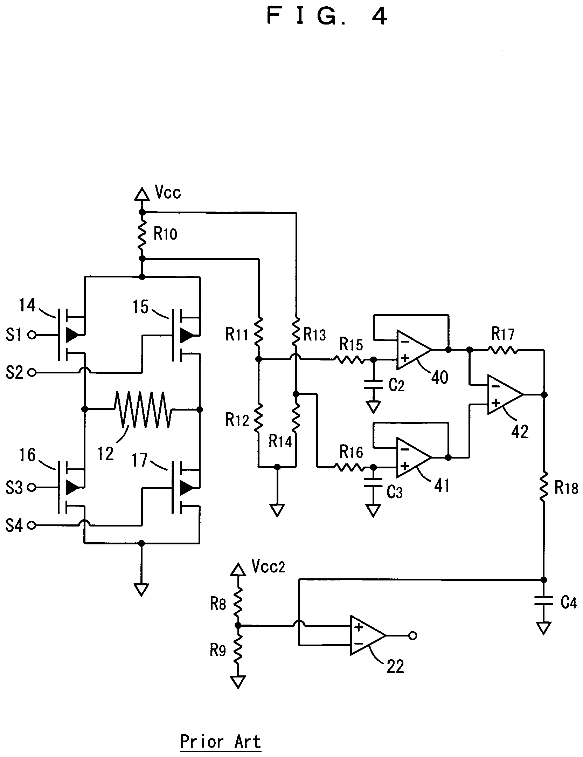

Ground faults (shorts to ground) must be detected upon driving of inductive loads such as solenoids or the like. Patent document 3: JP 2005-210871 A, Fig. 5, illustrates a typical detection circuit. In this circuit, a sensing resistor is disposed between a bridge having a built-in coil and a direct-current power supply. The circuit detects an increase in voltage at the sensing resistor when overcurrent flows on account of a ground fault. Fig. 4 illustrates an example of such a circuit. In the figure, the reference numeral 12 denotes a coil that is disposed between the mid-point between a first FET 14 and a second FET 16, and the mid-point between a third FET 15 and a fourth FET 17. The reference numerals S1 to S4 are gate signals to the FETs 14 to 17. The reference numerals R8 to R18 denote resistors. Among these, R10 is a sensing resistor and R8, R9 are resistors for generating a reference potential of a comparator 22. The reference numeral Vcc denotes a power supply, for instance of 12 V or 30 V, of the coil 12, and Vcc2 denotes a power supply, for instance, of 5 V. The reference numerals 40, 41 denote buffers, and the reference numeral 42 denotes a differential amplifier. The voltage of the sensing resistor R10 is monitored, since the first and second FETs 14, 15 break down on account of overcurrent when a ground fault occurs.

The sensing precision of the circuit of Fig. 4 drops due to variability in the resistors R11 to R14. A differential amplifier circuit, comprising the buffers 40, 41 and the differential amplifier 42, is thus required. This entails a non-negligible cost in order to drive several tens of coils 12 connected in parallel. Therefore, the inventors studied detection of ground faults in inductive loads using small-scale circuits, and arrived as a result at the present invention.
Patent document 1: JP 11-81105 A
Patent document 2: JP 62-6663 Y2
Patent document 3: JP 2005-210871 A

Prior Art document LAI R.S. ET AL: "A PWM METHOD FOR REDUCTION OF SWITCHING LOSS IN A FULL-BRIDGE INVERTER", PROCEEDINGS OF THE ANNUAL APPLIED POWER ELECTRONCIS CONFERENCE AND EXPOSITION (APEC). ORLANDO, FEB. 13 -17, 1994; [PROCEEDINGS OF THE ANNUAL APPLIED POWER ELECTRONICS CONFERENCE AND EXPOSITION (APEC)], NEW YORK, IEEE, US, vol. 1, 13 February 1994 (1994-02-13), pages 122-127, XP000467309, describes a hybrid pulsewidth modulation (HPWM) method which requires only two of the four switches in a full-bridge inverter to be pulsewidth-modulated at high frequency, thus effectively reducing the switching loss by a factor of two.US 2009/135531 A1 discloses an over-current protection scheme for a full bridge circuit.

It is an object of the present invention to allow detecting ground shorts using a simple, low-cost circuit, and to prevent breakdown of drive transistors.

The drive circuit for an inductive load of the present invention is provided with: an inductive load disposed between a midpoint between a first and a second transistor connected in series and a midpoint between a third and a fourth transistor connected in series;
a protective resistor disposed between sources or emitters of the first and third transistors and a direct-current power supply, and a sensing resistor disposed between low-potential sides of the second and fourth transistors and ground;
drive means for driving the first and third transistors through input of drive signals, each having a fixed potential, to gates or bases thereof; and
detection means for switching off the drive signals from the drive means when, during powering of the inductive load, a voltage applied to the sensing resistor is continuously equal to or lower, for a predetermined period of time or longer, than a threshold value for ground short detection.

The drive signals of the gates or bases of the first and third transistors need not be at the same potential. The position of the sources or the emitters of the second and fourth transistors may be on the side of the sensing resistor or on the side of the inductive load.

Preferably, switching of the inductive load is controlled through switching on/off of the first to fourth transistors, and
the detection means comprises a comparator that compares the voltage applied to the sensing resistor with the threshold value, and means for detecting that a comparator signal does not change for the predetermined time or longer, and for turning off the drive signals.

More preferably, duty ratios at which the first and third transistors are switched on are each greater than duty ratios at which the second and fourth transistors are switched on, in such a manner that the fourth transistor is switched on/off during the period over which the first transistor is switched on, and the second transistor is switched on/off during the period over which the third transistor is switched on. The on-duty ratio of the first transistor need not be identical to the on-duty ratio of the third transistor. The on-duty ratio of the second transistor need not be identical to the on-duty ratio of the fourth transistor.

The current flowing to a sensing resistor decreases when a ground short occurs. However, the current response to a control signal is delayed at the inductive load, and hence the current flowing to a sensing resistor may be small in some cases, even in a normal state. Therefore, ground shorts can be detected accurately, also at the inductive load, by detecting ground shorts when the voltage applied to the sensing resistor is continuously equal to or lower, for a predetermined period of time or longer, than a threshold value for ground short detection. Detection of ground shorts, however, is delayed in the above procedure. Therefore, a protective resistor is provided to lower the potential at the source or emitter of the first or third transistor, to limit as a result the current at the first or third transistor, and prolong thereby the time until breakdown due to overcurrent from a ground short. The above configuration allows detecting ground shorts accurately, and preventing breakdown of the first or third transistor, while avoiding loss of sensing precision at the resistor bridge and greater costs incurred by a differential amplifier circuit.

The detection means can be configured in a simple manner using a comparator that compares a voltage applied to the sensing resistor with a threshold value, and means for detecting that a comparator signal does not change for a predetermined time or longer, and for turning off the drive signals.

Further, the duty ratios at which the first and third transistors are switched on are each greater than the duty ratios at which the second and fourth transistors are switched on, in such a manner that the fourth transistor is switched on/off during the period over which the first transistor is switched on, and the second transistor is switched on/off during the period over which the third transistor is switched on. Thereby, the first and third transistors on the high-potential side may have a lower speed than the second and fourth transistors on the low-potential side. This allows reducing component costs.

Fig. 1 is a block diagram of a drive circuit in an example;
Fig. 2 is a set of waveform diagrams in an example, wherein 1) depicts the waveform of a set signal Set, 2) depicts the waveform of a reset signal Reset, 3) depicts the waveform of a gate signal Su of a setting FET on a high-potential side, 4) depicts the waveform of a gate signal Ru of a resetting FET on a high-potential side, 5) depicts the waveform of a gate signal Sd of a setting FET on a low-potential side, 6) depicts the waveform of a gate signal Rd of a resetting FET on a low-potential side, and 7) depicts a signal of a comparator for ground fault detection;
Fig. 3 is a set of waveform diagrams of current flowing through a sensing resistor in an example, wherein 1) depicts a gate signal in a low-potential side FET, 2) depicts current flowing through a sensing resistor, and 3) depicts a comparator signal; and
Fig. 4 is a block diagram of a drive circuit in a conventional example.

- 2: drive circuit
- 4: gate array
- 6: individual circuit
- 8, 9: drive IC
- 10: flip-flop array
- 12: coil
- 14 to 17: FET
- 20, 21: FET
- 22: comparator
- 40, 41: buffer
- 42: differential amplifier
- R1 to R18: resistor
- C1 to C4: capacitor
- Vcc, Vcc2: power supply

Preferred embodiments of the present invention are described below.

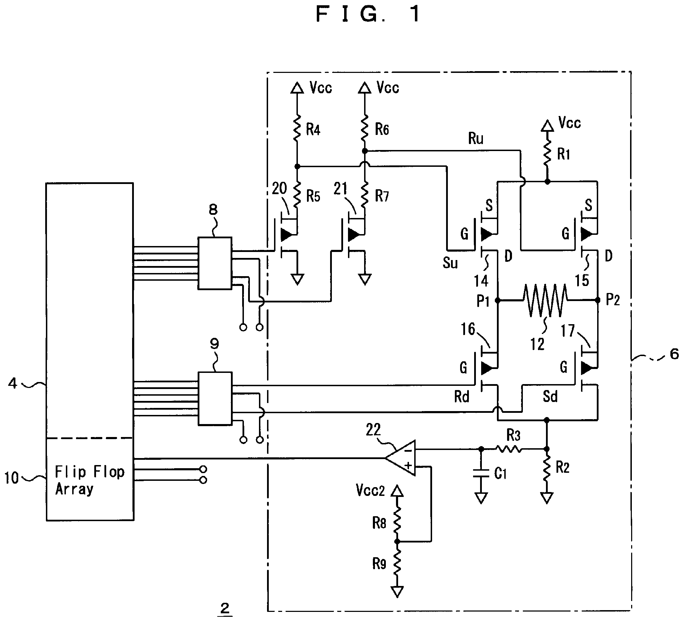

Figs. 1 to 3 illustrate a drive circuit for an inductive load 2. In Fig. 1, the reference numeral 4 denotes a gate array, which may also be a microprocessor or the like, the reference numeral 6 denotes an individual circuit provided for each coil 12, the reference numerals 8, 9 denote each a drive IC for driving the individual circuit 6, such that for instance several tens of individual circuits 6 are driven in parallel. The individual circuit 6 outputs a ground fault detection signal from the comparator 22. The detected signal is inputted into a flip-flop array 10 provided in the gate array 4, such that the drive circuit 2 is stopped when a ground fault is detected.

In the individual circuit 6, the reference numeral 12 denotes a coil, herein a solenoid coil, but which may also be a simple coil, a brushless motor coil or the like. The reference numerals 14 to 17 denote switching FETs, from among which FETs 14, 15 are high-voltage FETs according to the power supply Vcc, and the FETs 16, 17 are low-voltage FETs. The switching time of FETs 16, 17 is shorter than that of FETs 14, 15. FETs 14, 16 are disposed in series, between a protective resistor R1 on the side of the power supply Vcc and a sensing resistor R2 on the ground side. FETs 15, 17 are disposed in series between the protective resistor R1 and the sensing resistor R2. The coil 12 is disposed between the midpoint between FETs 14, 16 and the midpoint between FETs 15, 17. The reference numeral S denotes the sources, D the drains and G the gates of FETs 14, 15.

FET 20 drives FET 14, and FET 21 drives FET 15. FETs 16, 17 are driven directly by the drive IC 9. R4 to R7 denote resistors for determining the potential of a gate signal G that is applied to FETs 14, 15. The reference numeral R3 is a resistor on the input side of the comparator 22, C1 is a capacitor, and R8, R9 are resistors for generating a reference potential of the comparator 22. The power supply Vcc is set, for instance to 30 V or 12 V, and the power supply Vcc2 to 5 V or 3 V. However, the power supply Vcc2 may be omitted, in which case only the power supply Vcc is provided. The protective resistor R1 and the sensing resistor R2 have a resistance, for instance, ranging from about 0.1 to 10 Ω.

The drive circuit 2 is built into an actuator of a knitted fabric p1-down apparatus in a flat knitting machine. For instance, the drive circuit 2 drives a pawl or locking member for pulling a knitted fabric down, by way of a solenoid having the coil 12 built thereinto. The coil 12 is energized not only upon switching of the solenoid state, but also after switching of the solenoid state, as well as upon switching to a rise position (Set) and a sink position (Reset) of the solenoid. Several tens of individual circuits 6 are disposed in parallel in the pull-down apparatus. The individual circuits 6 are controlled by the gate array 4 and the drive ICs 8, 9. Other than in the knitted fabric pull-down apparatus of a flat knitting machine, the drive circuit 2 may also be used in a solenoid for controlling carrier hauling, or a solenoid for driving cams in the carriage of a flat knitting machine. In addition, the drive circuit 2 can be used, for instance, for driving brushless motor coils.

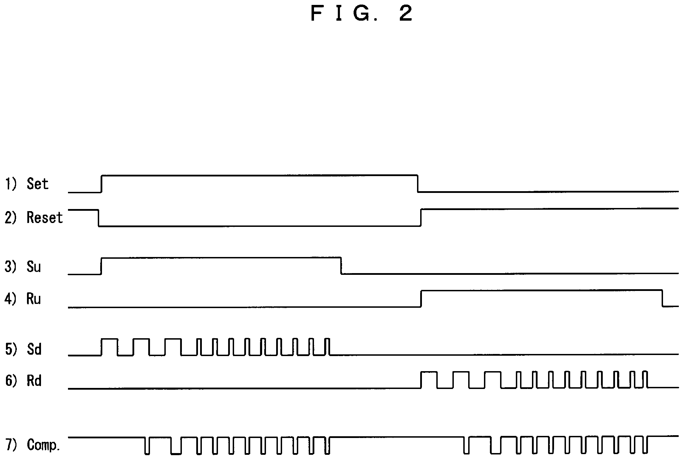

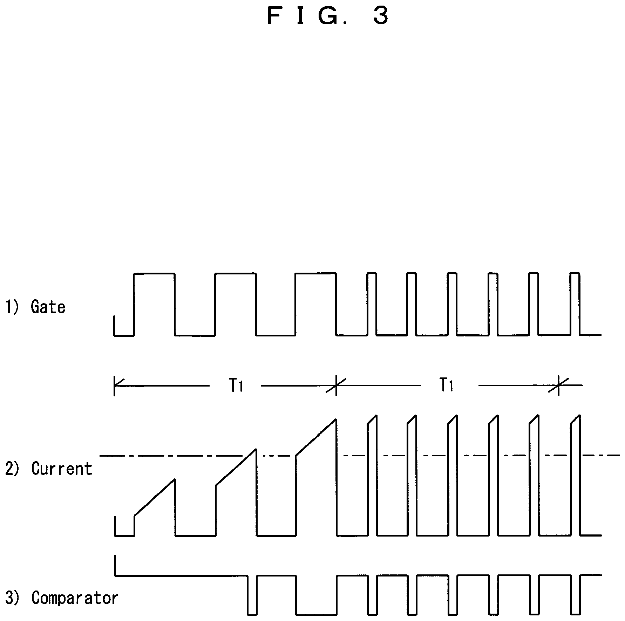

Fig. 2 illustrates drive waveforms at the individual circuit 6. In Fig. 2, 1) depicts the waveform of a set signal for setting the rise position of a solenoid through energization of the coil 12 from the FET 14 side to the FET 17 side; 2) depicts the waveform of a reset signal for resetting the solenoid through energization from FET 15 to the FET 16 side. The set signal and the reset signal are virtual signals in the drive ICs 8, 9. In Fig. 2, 3) depicts the waveform of a signal Su that is applied to the gate of FET 14, and 4) depicts the waveform of a signal Ru that is applied to the gate of FET 15. In the present embodiment, the widths of the signals Su, Ru are shorter than the widths of the signal Set and the signal Reset, but may be identical to the widths of the latter. In Fig. 2, 5) depicts the waveform of a signal Sd that is applied to the gate of FET 17, and 6) depicts the waveform of a signal Rd that is applied to the gate of FET 16. The signals in 3) to 6) are depicted as active HIGH, but in actuality are active LOW signals.

When the signals Su, Sd are both HIGH, a setting current flows through the coil 12. When the signals Ru, Rd are both HIGH, there flows a reset signal. The coil 12 is chopped and the rise is slow until the current stabilizes on account of the inductive load. Therefore, a higher duty ratio is set initially for the signals Sd, Rd. The duty ratio is reduced subsequently. At the LOW period of signals Su, Ru, the duty ratio is for instance set to 0. The corresponding output waveform of the comparator 22 is depicted in 7) of Fig. 2. This waveform is a waveform when there is no ground fault.

In Fig. 3, 1) depicts the current flowing through the gate signal of FETs 16, 17 and the sensing resistor R2, as well as the output waveform of the comparator 22. The duty ratio at which the gate signal is switched on is initially high but smaller later on. The response of the coil 12 to the switching of FETs 14 to 17 is slow. In Fig. 3, therefore, the current flows as illustrated in 2), such that the same current flows through the sensing resistor R2 in the absence of a ground fault. The threshold value of the comparator 22 is determined as indicated by the dashed line of 2) in Fig. 3, whereupon the output of the comparator changes as depicted in 3) of Fig. 3. If both FETs 16, 17 are off, the output of the comparator is kept HIGH. The current flowing through the sensing resistor R2 is small during a short time after switching of the state of the coil 12, even when FET 16 or 17 is on.

Accordingly, T1 is set as a time longer than the time elapsed since switching of the state of the coil 12 until the current flowing through the sensing resistor R2 is equal to or greater than the threshold value. This time is also set to be longer than one period upon switching control of FETs 16, 17. An anomaly is deemed to have occurred in the individual circuit 6 if the comparator 22 does not output even a single LOW during the time T1, i.e. if the state of the comparator 22 does not change during the time T1.

The operation in the present embodiment is explained returning to Fig. 1. To set the solenoid, FET 14 and FET 17 are switched on with the waveform of Fig. 2. FET 15 and FET 16 are operated to reset the solenoid. An overcurrent flows through FET 14 or FET 15 when a ground fault occurs on account of a wiring short during assembly of the solenoid, or when a ground fault occurs for some other cause after assembly. The points of ground fault occurrence are indicated by P1, P2 in Fig. 1. For instance, overcurrent flows through FET 14, and the latter breaks down, when a ground fault occurs at point P1. Likewise, overcurrent flows through FET 15, and the latter breaks down, when a ground fault occurs at point P2. The protective resistor R1 is provided in order to make the time until breakdown of FETs 14, 15 longer than the ground fault detection period T1. When a ground fault occurs, the source potential of FETs 14, 15 drops on account of protective resistor R1, and the gate potential difference decreases. The current flowing through FETs 14, 15 is limited thereby, and the time until breakdown can be made longer than the above period T1.

When a ground fault occurs, the current flowing through the sensing resistor R2 becomes substantially 0. Normally, the voltage of the sensing resistor R2 varies in synchrony with the switching on/off of FETs 16, 17, but this variation is small. The above variation is detected by the comparator 22. The detection threshold value is determined by the resistors R8, R9, but the threshold value may also be generated by way of a Zener diode or the like, instead of resistors. Next, the flip-flop array 10 of the gate array 4 detects that the comparator 22 has not changed to LOW even a single time during the period T1. For instance, a flip-flop circuit is provided in the flip-flop array 10 for each individual circuit 6, such that each flip-flop circuit is set at the LOW signal from the comparator 22. The presence or absence of ground faults can be detected by checking the output of the flip-flop circuit every period T1, and by resetting next the flip-flop circuit. Upon detection of a ground fault, for instance, the flat knitting machine is stopped, an anomaly is displayed, and driving of all the individual circuits 6 is discontinued, to prevent breakdown of FETs 14 to 17.

The following effects are elicited in the present embodiment.
(1) No resistor bridge of Fig. 4 is used for ground fault detection. Accordingly, no errors occur on account of resistor variability.
(2) No differential amplifying circuit is required for ground fault detection.
(3) Accordingly, ground faults can be detected with high precision using a small-scale circuit, whereby ground fault detection costs can be reduced.
(4) Ground faults are detected on the basis of the absence of even a single change to LOW by the comparator 22 during a time T1 that is shorter than the breakdown time of FETs 14, 15, and that is comparable to the response time of coil current to solenoid switching. As a result, ground faults can be detected accurately even when the coil 12 is switched and controlled by the FETs 14 to 17.
(5) The time required for ground fault detection is at most T1. Therefore, the breakdown time of FETs 14, 15 is made longer than the period T1 thanks to the limitation of overcurrent, resulting from a ground fault, that is afforded by the protective resistor R1.

The present embodiment describes an application in the pull-down apparatus of a flat knitting machine, but the drive circuit 2 may be used for any other application. Also, the switches used in the embodiment are FET switches 14 to 17, but bipolar transistors or the like may also be used for switching. In this case, the bases of PNP bipolar transistors are disposed at the positions of the gates, emitters at the position of the sources, and collectors at the position of the drains, of FETs 14, 15 in the embodiment. In the present embodiment, FETs 14, 15 are driven with wide pulses, and FETs 16, 17 with narrow pulses, in order to reduce the influence of, for instance, parasitic capacitance at the high-voltage FETs 14, 15. Accordingly, narrow pulses may be applied for instance to FETs 14, 15, and wide pulses to FETs 16, 17, in a case where FETs 14, 15 are high-speed FETs. In the present embodiment, the coil 12 is controlled through switching, but the embodiment is not limited thereto.

## Claims

1. A drive circuit (2) for an inductive load, **characterized by** comprising:
an inductive load (12) disposed between a midpoint (P1) between a first and a second transistor (14, 16) connected in series and a midpoint (P2) between a third and a fourth transistor (15, 17) connected in series;
a protective resistor (R1) disposed between sources or emitters of the first and third transistors and a direct-current power supply (Vcc);
a sensing resistor (R2), disposed between low-potential sides of the second and fourth transistors and ground, for detecting ground shorts between the inductive load and ground;
first drive means (8, 9, 20) for driving the first and third transistors through input of drive signals, each having a fixed potential, to gates or bases of the first and third transistors;
second drive means (8, 9, 21) for driving the second and fourth transistors,
the first to fourth transistors being driven by way of the first drive means and the second drive means in such a manner that the fourth transistor (17) is switched on/off a plurality of times during a period over which the first transistor (14) is switched on, and the second transistor (16) is switched on/off a plurality of times during a period over which the third transistor (15) is switched on; and
detection means (22) for switching off the drive circuit when, during powering of the inductive load (12), a voltage applied to the sensing resistor (R2) is continuously equal to or lower than a threshold value for ground short detection, for a predetermined time that is longer than a period over which the second and fourth transistors are switched on/off.

2. The drive circuit (2) for an inductive load according to claim 1, **characterized in that** the second and fourth transistors are switched on/off a plurality of times during the predetermined time.

3. The drive circuit (2) for an inductive load according to claim 1, **characterized in that** a duty ratio at which the second transistor (16) is switched on is large in an early period, and small in a late period, of a time interval during which the first transistor (14) is switched on, and
a duty ratio at which the fourth transistor (17) is switched on is large in an early period, and small in a late period, of a time interval during which the third transistor (15) is switched on.

4. The drive circuit (2) for an inductive load according to claim 3, **characterized in that** the first and third transistors (14, 15) have a lower speed than the second and forth transistors (16, 17) and are high-voltage FETs, and the second and fourth transistors (16, 17) are low-voltage FETs.

5. The drive circuit (2) for an inductive load according to any one of claims 1 to 4, **characterized in that** the inductive load is a solenoid coil (12).

6. The drive circuit (2) for an inductive load according to claim 5, **characterized in that** the solenoid is a solenoid that operates a knitted fabric pull-down member in a pull-down apparatus of knitted fabric in a flat knitting machine.

## Patentansprüche

1. Treiberschaltung (2) für eine induktive Last, **gekennzeichnet durch**:
eine induktive Last (12), die zwischen einem Mittenpunkt (P1) eines ersten und eines damit in Reihe verbundenen zweiten Transistors (14, 16) und einem Mittenpunkt (P2) eines dritten und eines damit in Reihe verbundenen vierten Transistors (15, 17) angeordnet ist,
einen Schutzwiderstand (R1) der zwischen Sources oder Emittern der ersten und dritten Transistoren und einer Gleichstromversorgung (Vcc) angeordnet ist,
einen Erfassungswiderstand (R2), der zwischen Niederpotentialseiten der zweiten und vierten Transistoren und der Erde angeordnet ist, um Erdungskurzschlüsse zwischen der induktiven Last und der Erde zu erfassen,
erste Treibereinrichtungen (8, 9, 20) zum Treiben der ersten und dritten Transistoren **durch** die Eingabe von Treibersignalen mit jeweils einem fixen Potential an Gates oder Basen der ersten und dritten Transistoren,
zweite Treibereinrichtungen (8, 9, 21) zum Treiben der zweiten und vierten Transistoren,
wobei die ersten bis vierten Transistoren **durch** die erste Treibereinrichtung und die zweite Treibereinrichtung derart getrieben werden, dass der vierte Transistor (17) mehrere Male während einer Periode, über die der erste Transistor (14) eingeschaltet ist, ein-/ausgeschaltet wird, und der zweite Transistor (16) mehrere Male während einer Periode, über die der dritte Transistor (15) eingeschaltet ist, ein-/ausgeschaltet wird, und
eine Erfassungseinrichtung (22) zum Ausschalten der Treiberschaltung, wenn während der Stromversorgung der induktiven Last (12) eine an dem Erfassungswiderstand (R2) angelegte Spannung kontinuierlich für eine vorbestimmte Zeitdauer, die länger als die Periode, über die die zweiten und vierten Transistoren ein-/ausgeschaltet werden, gleich oder kleiner als ein Schwellwert für eine Erdungskurzschlusserfassung ist.

2. Treiberschaltung (2) für eine induktive Last nach Anspruch 1, **dadurch gekennzeichnet, dass** die zweiten und vierten Transistoren mehrere Male während der vorbestimmten Zeit ein-/ausgeschaltet werden.

3. Treiberschaltung (2) für eine induktive Last nach Anspruch 1, **dadurch gekennzeichnet, dass** ein Betriebsverhältnis, mit dem der zweite Transistor (16) eingeschaltet wird, in einer frühen Periode eines Zeitintervalls, während dem der erste Transistor (14) eingeschaltet ist, groß ist und in einer späten Periode klein ist, und
ein Betriebsverhältnis, mit dem der vierte Transistor (17) eingeschaltet wird, in einer frühen Periode eines Zeitintervalls, während dem der dritte Transistor (15) eingeschaltet ist, groß ist und in einer späten Periode klein ist.

4. Treiberschaltung (2) für eine induktive Last nach Anspruch 3, **dadurch gekennzeichnet, dass** die ersten und dritten Transistoren (14, 15) eine kleinere Geschwindigkeit aufweisen als die zweiten und vierten Transistoren (16, 17) und Hochspannungs-FETs sind und dass die zweiten und vierten Transistoren (16, 17) Niederspannungs-FETs sind.

5. Treiberschaltung (2) für eine induktive Last nach einem der Ansprüche 1 bis 4, **dadurch gekennzeichnet, dass** die induktive Last eine Solenoidspule (12) ist.

6. Treiberschaltung (2) für eine induktive Last nach Anspruch 5, **dadurch gekennzeichnet, dass** das Solenoid ein Solenoid ist, das ein Gestrick-Abwärtsziehglied in einer Abwärtsziehvorrichtung für ein Gestrick in einer Flachstrickmaschine betreibt.

## Revendications

1. Circuit d'excitation (2) pour une charge inductive, **caractérisé en ce qu'**il comprend :
une charge inductive (12) disposée entre un point intermédiaire (P1) situé entre un premier et un deuxième transistor (14, 16) connectés en série et un point intermédiaire (P2) situé entre un troisième et un quatrième transistor (15, 17) connectés en série ;
une résistance de protection (R1) disposée entre les sources ou les émetteurs des premier et troisième transistors et une alimentation en courant continu (Vcc) ;
une résistance de détection (R2), disposée entre des côtés de potentiel bas des deuxième et quatrième transistors et la masse, pour détecter des courts-circuits à la masse entre la charge inductive et la masse ;
des premiers moyens de commande (8, 9, 20) pour commander les premier et troisième transistors par l'intermédiaire de l'introduction de signaux de commande, chacun ayant un potentiel fixe, sur des grilles ou des bases des premier et troisième transistors ;
des deuxièmes moyens de commande (8, 9, 21) pour commander les deuxième et quatrième transistors,
les premier à quatrième transistors étant commandés au moyen des premiers moyens de commande et des deuxièmes moyens de commande d'une manière telle que le quatrième transistor (17) est commutépassant/bloqué plusieurs fois pendant une période sur laquelle le premier transistor (14) est commuté passant, et le deuxième transistor (16) est commuté passant/bloqué plusieurs fois pendant une période sur laquelle le troisième transistor (15) est commuté passant ; et
des moyens de détection (22) pour bloquer le circuit de commande lorsque, pendant l'alimentation de la charge inductive (12), une tension appliquée à la résistance de détection (R2) est continuellement égale ou inférieure à une valeur de seuil pour une détection de court-circuit de masse, pendant une durée prédéterminée qui est plus longue qu'une période sur laquelle les deuxième et quatrième transistors sont commutés passants/bloqués.

2. Circuit d'excitation (2) pour une charge inductive selon la revendication 1, **caractérisé en ce que** les deuxième et quatrième transistors sont commutés passants/bloqués plusieurs fois pendant la durée prédéterminée.

3. Circuit d'excitation (2) pour une charge inductive selon la revendication 1, **caractérisé en ce qu'**un rapport cyclique avec lequel le deuxième transistor (16) est commuté passant est grand dans une période initiale et petit dans une période finale, d'un intervalle de temps pendant lequel le premier transistor (14) est commuté passant, et
un rapport cyclique avec lequel le quatrième transistor (17) est commuté passant est grand dans une période initiale et petit dans une période finale, d'un intervalle de temps pendant lequel le troisième transistor (15) est commuté passant.

4. Circuit d'excitation (2) pour une charge inductive selon la revendication 3, **caractérisé en ce que** les premier et troisième transistors (14, 15) ont une vitesse inférieure à celle des deuxième et quatrième transistors (16, 17) et sont des FET haute tension, et les deuxième et quatrième transistors (16, 17) sont des FET basse tension.

5. Circuit d'excitation (2) pour une charge inductive selon l'une quelconque des revendications 1 à 4, **caractérisé en ce que** la charge inductive est une bobine de solénoïde (12).

6. Circuit d'excitation (2) pour une charge inductive selon la revendication 5, **caractérisé en ce que** le solénoïde est un solénoïde qui actionne un élément de tirage vers le bas de tissu tricoté dans un dispositif de tirage vers le bas de tissu tricoté dans une machine à tricoter à plat.
